# EUROPEAN PATENT SPECIFICATION

(11) **EP 0 872 710 B1**
(45) Date of publication and mention of the grant of the patent: **11.08.2004**
(21) Application number: 97909740.9
(22) Date of filing: 04.11.1997
(51) Int. Cl.: G01C 21/00, G09G 5/00

(54) **IMAGE/VOICE OUTPUT APPARATUS**
BILD-/SPRACHAUSGABEVORRICHTUNG
DISPOSITIF A SORTIE IMAGE/VOIX

(30) Priority: 01.11.1996 JP 29197596
(43) Date of publication of application: 21.10.1998
(73) Proprietor: SEIKO EPSON CORPORATION, Shinjuku-ku, Tokyo 163-0811 (JP)
(72) Inventor: MOTEKI, Hiroyuki, Suwa-shi, Nagano-ken 392 (JP); KOBAYASHI, Mamoru, Suwa-shi, Nagano-ken 392 (JP)
(74) Representative: Sturt, Clifford Mark
(86) International application number: PCT/JP1997/004014
(87) International publication number: WO 1998/020303

(56) References cited:
- JP-A- 1 019 500
- JP-A- 4 319 985
- JP-A- 7 004 981
- JP-A- 9 123 848
- JP-A- 9 126 803
- JP-A- 9 257 499

## Description

### BACKGROUND OF THE INVENTION

### Field of the Invention

The invention is directed to an audio-video output device related to a car navigation system that can output video and audio information from a TV, a video player, or a car navigation system.

### Description of the Related Art

Audio-video output devices, such as TV receivers, that can output images and voices are used in a wide variety of applications such as terminals for personal computers (PCs) and game computers. Furthermore, as flat and compact displays such as liquid crystal displays (LCDs) and plasma displays have become available in addition to the conventional CRTs, the applications for displays that can display video information are expanding further. Audio-video output devices equipped with a compact display such as an LCD are also being considered for embedding in cars. One of these applications is an on-board TV receiver which moves with the car and easily provides the enjoyment of TV programs in rest areas and camping sites. This receiver can also be used as the terminal of a car navigation system that indicates/displays the current position and the destination of the car to the driver using GPS (Global Positioning System) data. These audio-video output devices are also being used as the GUI (graphical user interface) terminals for controlling air conditioners and other systems.

As explained above, because audio-video output devices are equipped with the function of a terminal that provides information to users and into which information is input based on visual and audio senses, they are expected to be used in a wide variety of applications in the future, in addition to the applications described above. However, having multiple audio-video output devices for various different applications is inconvenient. For example, installing separate audio-video output devices for a TV, a car navigation system, and a video player in a small space inside a car would be a waste of space, and would also require multiple wiring and power supply facilities as well. Therefore, one idea being suggested is to provide an audio-video output device into which audio-video information for TV and audio-video information for car navigation can be input and displayed by switching the input sources, for example.

By configuring the device such that video information and audio information can be displayed by switching the input sources as explained above, a single audio-video output device can be used to output images and voices from multiple input sources. Therefore, a single audio-video output device can be used both as a TV receiver and a car navigation terminal in a car. However, since the input source must be switched for output, TV programs cannot be viewed when information such as destination and current location is being set using the device as the car navigation terminal. Conversely, even if a change occurs in the car navigation data, etc. while the device is being used as a TV, such a change cannot be communicated. As explained above, a device that displays information by switching the input source requires a small space and small hardware because a single display can display outputs from multiple input sources, and thus offers an advantage of lower overall system cost. However, such a device cannot display information from multiple input sources simultaneously. Therefore, in this respect, it would be more desirable to provide multiple audio-video output devices for the individual systems. However, providing multiple devices poses cost, hardware, and space issues as explained above.

Prior art devices related to the present invention are disclosed in JP-A-4-319985, JP-A-64-19500 and JP-A-7-4981.

### Summary of the Invention

Therefore, the object of the invention is to provide an audio-video output device that can provide the user with information from multiple input sources by means of a single display. Another object of the invention is to provide an audio-video output device that can provide the user with information from one of the multiple input sources on a real-time basis regardless of the mode in which the audio-video output device is set. Still another object of the invention is to provide a vehicle-mounted audio-video output device that can provide the user with updated information if the navigation system's information changes while the user is watching the TV, for example; and yet another object of the invention is to provide a car navigation system that can be used for multiple purposes by adopting the audio-video output device according to the invention.

The main objects of the invention are solved by an audio-video output device according to present claim 1 or claim 6.

The present audio-video output device can be provided with at least two audio output means, or a video output means that can display two pieces of video information by splitting the screen, wherein the audio information or video information from at least two of the multiple sources can be output. Furthermore, one of the two pieces of audio 5 information that can be output from the two audio output means or one of the two pieces of video information that can be split and output, can be allocated to a particular source.

That is, the present audio-video output device having two audio output means can be provided with a first input means into which the video information and audio information from a first source can be input; a second input means into which the video information and audio information from a second source can be input; a video output means that can output the video information from either the first or second source; a first audio output means that outputs the audio information from either the first or second source, whichever is being output to the video output means; and a second audio output means that can output only the audio information from the first source. Since the audio-video output device according to the invention is equipped with the second audio output means, the audio information from the first source can be output even while the video information and the audio information from the second source are being output from the audio-video output device. Consequently, the information from the first source that is converted into a voice can be constantly monitored. Moreover, providing a first audio selection means that selects either the audio information from the first or second source, whichever is being output to the video output means, and a second audio selection means that selects either the audio information selected by said first audio selection means or the audio information from the first source and supplies it to the second audio output means, allows the user to select whether or not to constantly monitor the first source.

Furthermore, if the video output means is equipped with a multi-screen display mode that displays video information from the first and second sources by splitting the display screen into multiple screens, providing a third audio selection means that selects the audio information from the source displayed in the predetermined area of the display screen and supplies it to the first audio output means and the second audio selection means, enables the selection of the input source for the audio information being supplied from the first audio output means, based on the display position of the image.

Moreover, the present audio-video output device, which can display video information from at least two sources by splitting the screen, can have a first input means that can input the video information and audio information from the first source; a second input means that can input the video information from the second source; a third input means that can input the video information and audio information from the third source; a video output means that can output the video information from the first, second, or third source; and a first audio output means that outputs the audio information from the first, second, or third source, whichever is being output to the video output means; wherein the video output means is provided with a single-screen display mode which displays the first, second, or third source in the display screen and with a multi-screen display mode which splits the display screen, displays the video information from the first source in one of the split screen, and displays the video information from either the second or third source in the other split screen. Providing such a multi-screen display mode makes it possible to display the video information from the first source without fail even while the video information from the second or third source is being output, so that the information from the first source can be constantly monitored.

Furthermore, the present audio-video display device can be provided with a first video selection means that selects the video information from the first, second, or third source and supplies it to the video output means, and with a second video selection means that selects the video information from the first source in the multi-screen display mode and supplies it to the video output means as the video information for one of the split screen, so that the first video selection means can select the video information from either the second or third source in the multi-screen display mode and supplies it to the video output means as the video information for the other split screen. Consequently, it is possible to set the audio-video output device so that one of the three sources can be selected in the single-screen display mode, and the first source is always displayed in the multi-screen display mode. Of course, the same holds true for an audio-video output device that can accept inputs from four or more sources.

By using a display screen having a large vertical-to-horizontal ratio, e.g., 9 : 16, as the display screen of the video output means, sufficiently large images can be obtained even in the multi-screen display mode. Moreover, in the multi-screen display mode, providing a mode for splitting the screen in the middle and another mode for splitting the screen so that the vertical-to-horizontal ratio of one of the screens will be 3 : 4, will provide displays suitable to specific applications.

By providing the audio-video output device which can display information by splitting the screen, with a second audio output means that can output the audio information from the first source only, as in the case described above, it becomes possible to monitor the audio information from the first source in any mode. It also becomes possible to select monitoring, or to select the source to be output from the first audio output means based on the area in which the video information is being displayed. When the display screen is vertically split into at least two screens in the multi-screen display mode and the video information from the sources to be displayed on the left and right areas can be swapped, it is possible to adopt a process in which a third audio selection means selects the audio information from the source displayed in either the left or right area. For example, if the device is designed to select the audio information from the source displayed on the left area, the user can select the audio information to be output from the first audio output means by moving the position in which the video information is displayed.

Furthermore, when the present audio-video output device is used in the terminal of a car navigation system, the video information and audio information from the first source which supplies driving information can be the video information and audio information from the car navigation system while the video information and audio information from the second source can be the video information and audio information from an instrument such as a TV tuner. In a vehicle-mounted device, a thin liquid crystal display device that can be mounted in a vehicle can be used as the video output means, and a wide liquid crystal display device is suitable if the screen can be split for display. A device that can output voice from a car audio system via FM waves can be used as the first audio output means.

When implementing the invention as a vehicle-mounted audio-video output device, it is possible to design the device so that it automatically switches to the single-screen display mode during driving even if the dual-screen display mode is set, allowing video information from the car navigation system, i.e., the first source, to be output.

Furthermore, a car navigation system equipped with the aforementioned functions can be provided by installing the present audio-video output device and by providing this audio-video output device with a car navigation information supply device that can supply the video information and audio information for car navigation as the video information and audio information from the first source.

### Brief Description of the Drawings

Fig. 1 is a schematic diagram of the audio-video output device (AV monitor) related to an embodiment of the invention;
Fig. 2 illustrates the back side of the monitor area of the AV monitor shown in Fig. 1;
Fig. 3 is a block diagram showing the configuration of the AV monitor shown in Fig. 1;
Fig. 4 is a flow chart showing an overview of the processing in the AV monitor shown in Fig. 1;
Fig. 5 illustrates the single-screen display mode and the dual-screen display mode;
Fig. 6 illustrates source switching;
Fig. 7 illustrates display mode switching in the single-screen display mode;
Fig. 8 illustrates display mode switching in the dual-screen display mode; and
Fig. 9 illustrates the switching of two screens.

The explanations of the symbols used in the drawings follow.
- 1: Tuner
- 2: Car navigation information input terminal
- 3: TV antenna terminal
- 4: Video information input terminal
- 5: Video information input terminal
- 10: Monitor
- 11: LCD panel
- 20: Remote controller
- 32: Navigation unit
- 39: AV monitor (audio-video output device)
- 40: Microcomputer
- 42: TV tuner
- 50: AV selection area
- 51, 52, 53: Audio inibrmation selector
- 55, 56: Video information selector
- 101: Car navigation system

### Description of the Preferred Embodiments

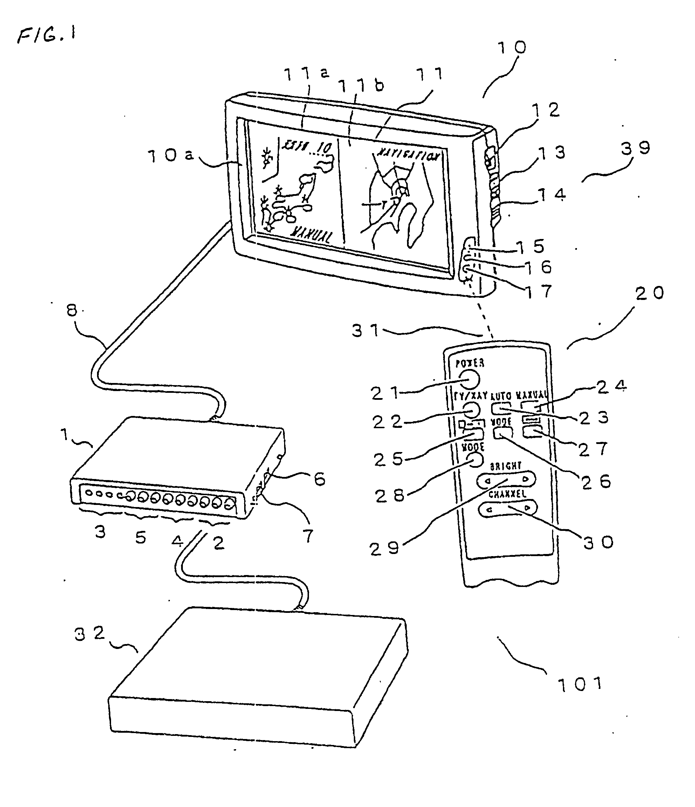

A more detailed explanation is provided below with reference to an embodiment of the invention. Fig. 1 shows the schematic configuration of a car navigation system that uses the audio-video output device according to the invention. Audio-video output device (AV monitor) 39 in this embodiment is provided with monitor 10 which is equipped with large liquid crystal display panel 11, and with tuner 1 which can select information from multiple sources and supply it to said monitor 10, and the selection of the source to be output from AV monitor 39, operations, and monitor mode setting, etc. can be performed using remote controller 20 via an infrared interface. Furthermore, car navigation unit 32, which provides car navigation information as audio and video information, is connected to said AV monitor 39, thus forming car navigation system 101 of this embodiment.

Tuner 1 of AV monitor 39 is provided with car navigation input terminal 2 (first source) into which the audio and video information from car navigation unit ("NAV") 32, antenna terminal 3 (second source) to which four sets of diversity antenna can be connected, video input terminal 4 (third source) into which audio and video information from a video device, etc. can be input, and video output terminal 5 which can supply audio and video signals to an externally provided TV monitor in the rear passenger compartment. As described above, although the AV monitor in this embodiment is a compact system that can be mounted in a vehicle, it is a full-fledged AV monitor with built-in multiple AV interface functions and is designed to be able to be used for a variety of applications.

Although not shown in the figure, Tuner 1 is provided with a power supply terminal for obtaining power from the car battery, and with an audio output terminal which can be connected to a transmitter antenna which is the antenna of FM transmitter circuit 44 which performs the function of a first audio output means which relays audio signals to the car audio system using FM waves (VHF waves), etc. Furthermore, audio selection switch 6 for selecting the speaker sound of monitor 10 which performs the function of the second audio output means, and volume adjustment switch 7 for adjusting the output level in accordance with the intensity of the audio signal from the car navigation unit are provided on the side surface of tuner 1. Connection cord 8 extends from tuner 1, and the video and audio data to be output through monitor 10 can be supplied via said connection cord 8.

Monitor 10 in this embodiment uses thin liquid crystal display panel 11 which can be easily installed in a car as a video output device, and AV monitor 39 in this embodiment uses a 7-inch wide monitor with a 9 : 16 vertical-to-horizontal ratio instead of a conventional liquid crystal panel with a 3 : 4 vertical-to-horizontal ratio. Although details will be explained below, the use of the wide monitor allows AV monitor 39 in this embodiment to implement both the single-screen display mode and the dual-screen display mode in which the screen can be vertically split to display screens 11a and 11b. Furthermore, multiple display modes (i.e., the Normal mode, the Zoom mode, and the Wide mode) are provided in the single-screen display mode, and various modes (i.e., the Twin mode, the L Main mode, and the R Main mode) are provided in the dual-screen display mode.

Monitor 10 of this embodiment is also provided with the function of a user interface for receiving control signals from the remote controller; and for this reason, remote controller light receiving area 17 is installed adjacent to liquid crystal panel 11 on surface 10a of monitor 10. Audio volume controller 12 for adjusting the volume of the speaker in monitor 10, selection switch 13 for selecting a backlight mode (Auto or High (high contrast)) for the liquid crystal display panel, and main power supply switch 14 are also provided. Power supply lamp 15 and dimmer light receiving area 16 are also positioned adjacent to remote controller light receiving area 17, making it possible to automatically adjust screen (liquid crystal monitor) 11 according to the brightness inside the car so that it is easier to view.

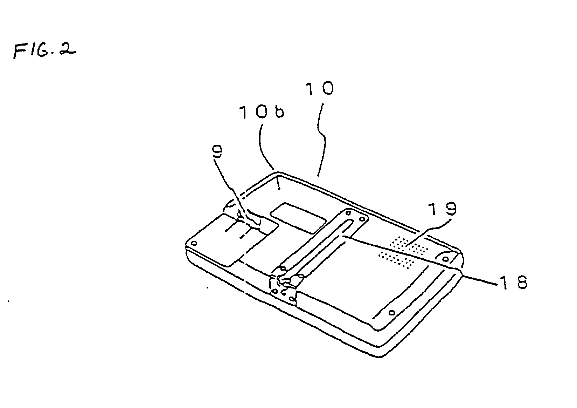

Fig. 2 provides an overview of back side 10b of monitor 10 of this embodiment. Back side 10b of monitor 10 is provided with terminal 9 for connecting connection cord 8 from tuner 1 and speaker 19 which performs the function of the aforementioned second audio output means. Stand installation hardware 18 for mounting monitor 10 inside a car is also provided.

All detailed operations of AV monitor 39 in this embodiment can be performed using remote controller 20. Power supply key 21 is located toward the top of remote controller 20; and if power supply switch 14 of monitor 10 is in the standby mode, pressing power supply key 21 of remote controller 20 turns the power on, changing main power supply lamp 15 from red to green and starting the operation of AV monitor 39. TV/NAV key 22 is provided below power supply key 21, which can be used to switch the input source to be displayed on monitor 10 in turn. In this embodiment, pressing TV/NAV key 22 switches the input source in turn from TV, to the car navigation unit, and to the video system.

Next to TV/NAV key 22, auto-presetting switch 23 for automatically searching for television (TV) channels and storing all channels that can be received and switch 24 to be used by the user for manually selecting a channel are provided. This configuration allows the user to store the appropriate channels out of the TV channels that can be received, and the video and audio information from the selected channel is processed as video and audio information from the TV input (second source) as will be explained below.

Several screen control switches are provided below these aforementioned switches. The first of these is single/dual-screen selection switch 25, and pressing this switch toggles liquid crystal display panel 11 between the single- and dual-screen display modes. Mode selection key 26, located next to single/dual-screen selection switch 25, can be used to select a display mode further within the single- and dual-screen display modes. Although details will be explained below, pressing mode selection key 26 in the single-screen display mode switches the mode in turn from Normal (images with 3 : 4 vertical-to-horizontal ratio), to Zoom (overall magnification while maintaining the 3 : 4 vertical-to-horizontal ratio), and to Wide (images with 9 : 16 vertical-to-horizontal ratio). In the dual-screen display mode, pressing mode selection key 26 switches the mode in turn from the Twin mode which evenly splits screen 11, to the L Main mode which splits the screen so that left-side screen 11a has images with 3 : 4 vertical-to-horizontal ratio, and to the R Main mode which splits the screen so that right-side screen 11b has images with 3 : 4 vertical-to-horizontal ratio. Furthermore, left-right swapping key 27 is positioned next to mode selection switch 26; and pressing this key 27 in the dual-screen display mode swaps the sources to be displayed in left and right screens 11a and 11b.

Mode adjustment key 28 is located below these other keys, which can be used in the single-screen display mode to fine-tune the screen and images from each source. Pressing mode adjustment key 28 switches the adjustment mode endlessly in turn from brightness, shade, tone, frequency of the FM broadcasting for transmitting audio information, and to setting of dual audio mode for TV; and in each of these modes, brightness adjustment key 29 located on the lower side can be used to make the most appropriate setting. The setting result is stored separately for each source, and display and audio output are made in the state most suitable to the user based on the set information in the dual-screen display mode as well.

Channel selection switch 30 is located toward the very bottom of remote controller 20, which can be used to switch TV channel sources. These key operations are output from the remote controller light emitting area 31 on the top of remote controller 20 as infrared data which is then intercepted by light receiving window 17 of monitor 10. The data is then relayed to the microcomputer provided in tuner 1 via connection cord 8, where the instruction is analyzed and processing appropriate to each mode takes place.

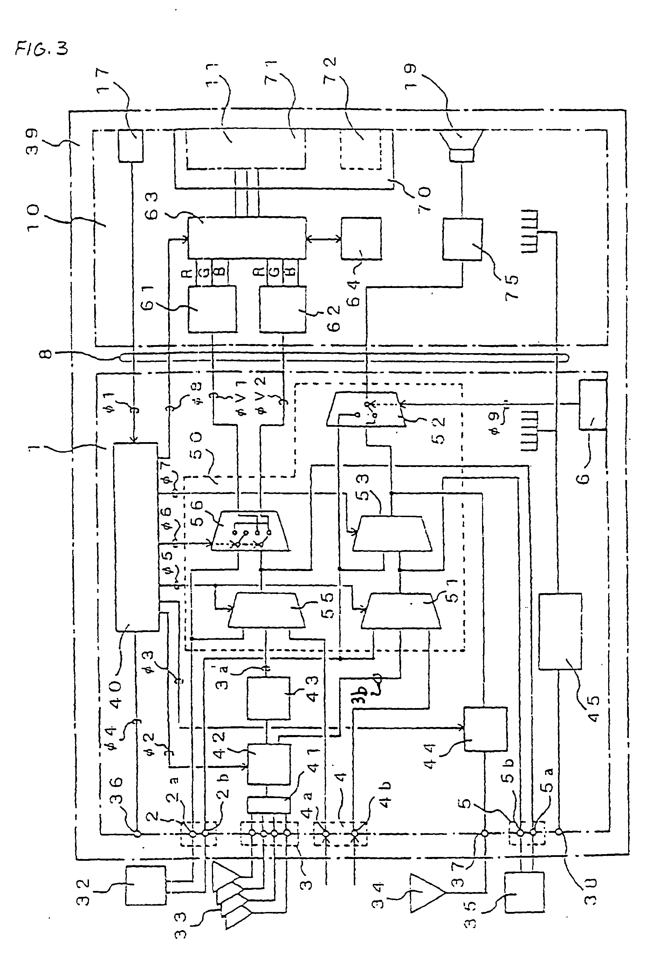

Fig. 3 illustrates the configuration of AV monitor 39 in this embodiment using a block diagram. AV monitor 39 in this embodiment is controlled by microcomputer 40 which receives control signal φ1 from remote controller 20 via light receiving window 17. First, video information 2a and audio information 2b from car navigation unit 32, which are input into NAV input terminal 2, are supplied to AV selection area 50 which selects information from various sources including other sources. In AV monitor 39 in this embodiment, TV broadcasting (TV) information obtained via the antenna and video information entered from video terminal 4 are provided as information supplied from other sources.

Tuner 1 of AV monitor 39 in this embodiment is also equipped with the function of a TV tuner. Four antennas 33 can be connected to antenna terminal 3 of tuner 1 in this embodiment, and diversity selector 41 automatically selects from these antennas one that has the strongest signal. TV input signal from diversity selector 41 is selected by TV tuner 42, and the video information and audio information from the specified channel are selected. TV tuner 42 in this embodiment is controlled by microcomputer 40 which receives instructions from remote controller 20, and for this purpose, signal φ2 for selecting a station is supplied from microcomputer 40 to TV tuner 42. Video information selected by TV tuner 42 is amplified via intermediate frequency amplification (IF) circuit 43 and is then supplied to AV selection area 50 as TV input video information 3a. Likewise, audio information selected by TV tuner 42 is supplied to AV selection area 50 as audio information 3b of the TV input.

Signals from a video instrument, such as a home video player, and signals for controlling the car (signals other than those from the car navigation system) can be connected to video input terminal 4, and video information 4a and audio information 4b from the instrument connected to said terminal 4 are supplied to AV selection area 50.

AV selection area 50 in this embodiment is mainly equipped with five selectors; 51, 52, 53, 55, and 56. Selectors 55 and 56 are used for selecting video information. In AV selection area 50 in this embodiment, input-side selector 55 is equipped with the function of the aforementioned first video selection means, so that video information from one of the three sources (NAV 2a, TV 3a, and video 4a) can be selected based on 2-bit selection signal φ5 supplied from microcomputer 40. Therefore, in the single-screen display mode, selection signal φ5 corresponding to NAV 2a, TV 3a, or video 4a is supplied from microcomputer 40; and in the dual-screen display mode, selection signal φ5 corresponding to either TV 3a or video 4a is supplied. The output from this input-side selector 55 is supplied to selector 56. The output from input-side selector 55 also becomes video information 5a for video output and is supplied to video output terminal 5. Therefore, if rear compartment monitor 35 is connected to video output terminal 5, information from NAV 2a, TV 3a, or video 4a, whichever is selected by selector 55, can be monitored in the rear passenger compartment.

Output-side selector 56 is equipped with the function of the aforementioned second video selection means, and the output selected by input-side selector 55 and video information 2a from the car navigation unit are input into this selector 56. Selector 56 is also controlled by selection signal φ6 from microcomputer 40; and in the single-screen display mode, the video information from the source selected by input-side selector 55 is output as first video signal φV2. In the dual-screen display mode, video information 2a from the NAV is output as first video signal φV1 and the video information from the source selected by input-side selector 55 is output as second video signal φV2. Consequently, in the dual-screen display mode, video information 2a from the car navigation unit is always selected as the video information for one of the screens and is always displayed on the left or right area of screen 11. Therefore, the video information from NAV can be constantly monitored along with the video information from another source.

First and second video signals φV1 and φV2 which are output from AV selection area 50 are supplied to monitor 10 via connection cord 8, demodulated into R, G, and B color video signals by first and second chrominance demodulators 61 and 62, and are then supplied to controller IC 63 for video synthesis. Controller IC 63 and field memory 64 together form the video synthesis circuit, which can synthesize the information in first and second video signals φV1 and φV2 into images in the various modes described below, according to serial signal φ8 from microcomputer 40, and can supply these images to liquid crystal display module 70. Liquid crystal display module 70 is provided with liquid crystal driver 71 equipped with the aforementioned wide liquid crystal panel 11, a driver IC for driving wide liquid crystal panel 11, and a controller IC for controlling the driver IC; and with BL driver 72 for driving the backlight. BL driver 72 in this embodiment is equipped with the function for automatically adjusting the brightness of the backlight according to the intensity of the ambient light detected by the dimmer light receiving area as explained above.

The audio information selection function of AV selection area 50 of tuner 1 is explained below. AV selection area 50 in this embodiment is also equipped with an audio information selection function. Selectors 51, 52, and 53 of AV selection area 50 in this embodiment are the selectors used for selecting audio information. Input-side selector 51 is equipped with the function of the aforementioned first audio selection means, and this selector 51 selects audio information from one of the three sources (NAV 2b, TV 3b, and video 4b). The same 2-bit selection signal φ5 as that supplied to video-side selector 55 is supplied to input-side selector 51 from microcomputer 40, so that one of the audio signals 2b, 3b, and 4b that are input into selector 51 from the three sources can be selected. The output from this input-side selector 51 becomes the input for the next-stage selector 53, and at the same time the audio information selected by this selector 51 becomes audio output 5b of video output terminal 5 and can be supplied, along with the aforementioned video output 5a, to external monitor 35 such as a monitor in the rear passenger compartment.

Selector 53 in the next stage is equipped with the function for selecting audio information from the same source as that displayed in the specified location in the dual-screen display mode, and is equipped with the function of the aforementioned third audio selection means. AV monitor 39 of this embodiment is designed to select the audio information from the source of the image being displayed on left side 11a of display panel 11. For this reason, audio information 2b from NAV which is always displayed on one of the split screens and the audio information selected by input-side selector 51 are input into selector 53, and the audio information for the source displayed on the left side of the screen is selected based on selection signal φ7 from microcomputer 40. Then, the audio information selected by this selector 53 becomes one of the input sources for the next output-side selector 52, is at the same time frequency-modulated through FM transmitter circuit 44 equipped with the function of the aforementioned first audio output means, and is connected to FM output terminal 37. Transmitter antenna 34 can be connected to this FM output terminal 37 so that the audio information selected by selector 53 can be played inside the car using the car audio system. The desired frequency can be selected in FM transmitter circuit 44 of this embodiment, and control signal φ3 from microcomputer 40 is supplied to FM transmitter circuit 44 to enable presetting of that frequency.

Audio information 2b from NAV and the audio information corresponding to the image selected by third selector 53 are input into output-side selector 52, so that and one of these can be output. Therefore, if selector 52 is equipped with the function of the aforementioned second audio selection means and if audio information 2b from NAV is selected, audio information 2b from NAV is output from selector 52 regardless of the image being displayed and is supplied to monitor 10 via connection cord 8. In monitor 10, the output of selector 52 is amplified by audio amplifier 75 and is output from speaker 19 on the back side. In AV monitor 39 of this embodiment, selection switch 6 is provided on the side surface of tuner 1 so that the user can select the audio information to be output from speaker 19 of monitor 10. Therefore, if the output of selector 53 is selected based on selection signal φ9 from selection switch 6, the audio information that corresponds to the image being displayed on display panel 11 is output from speaker 19 of monitor 10. On the other hand, if audio information 2b from NAV is selected by selection switch 6, audio information 2b supplied from NAV system 32 is output regardless of the image being displayed on display panel 11, enabling constant monitoring of the state of NAV.

AV monitor 39 of this embodiment is further provided with power supply terminal 38 which can be connected to the cigarette lighter socket inside the car for obtaining power, so that power can be supplied to various systems, such as tuner 1 and monitor 10, via power supply unit 45. Driving monitor terminal 36 is also provided which can be connected to the hand brake (parking brake); and signal φ4 that is input from this monitor terminal 36 is used to determine whether or not the parking brake is set, so that microcomputer 40 can determine whether or not the car is being driven.

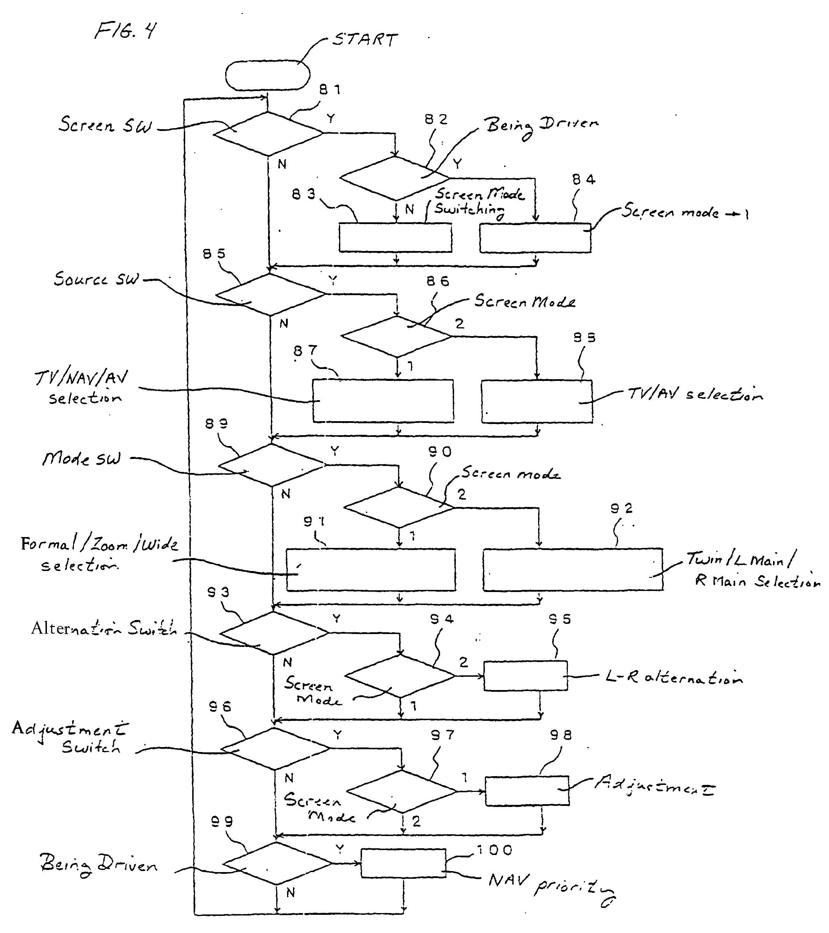

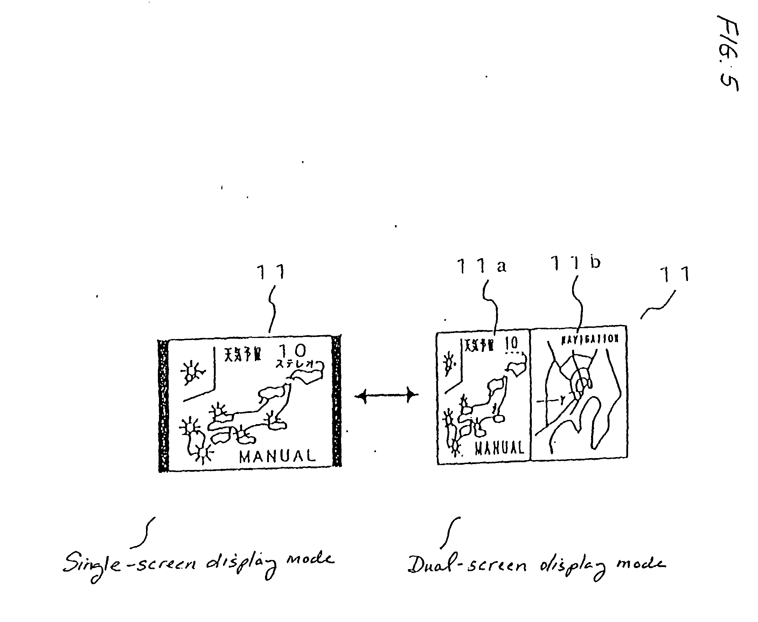

The operations related to display and source switching of AV monitor 39 in this embodiment will be explained based on the flow chart shown in Fig. 4. First, in Step 81, pressing single/dual-screen selection switch 25 of remote controller 20 toggles between the single-screen display mode which displays a single screen on panel 11 and the dual-screen display mode which displays two screens by splitting panel 11, as shown in Fig. 5. Since AV monitor 39 of this embodiment can monitor whether or not the car is being driven, when single/dual-screen selection switch 25 is pressed in Step 81, whether or not the car is being driven is determined in Step 82. If the car is not being driven, the panel 11 is alternated between the single-screen display mode and the dual-screen display mode, as shown in Fig. 5. On the other hand, if the car is being driven, the panel 11 is set to the single-screen display mode in Step 84 and enters the NAV priority mode described below, and thus video information 2a from NAV is always displayed. In the dual-screen display mode, video information 2a from NAV is always displayed on one of the screens as shown in Fig. 5, so that the information from NAV can be constantly monitored along with TV images and video images. The display position and size of video information 2a from NAV can be freely changed as explained below.

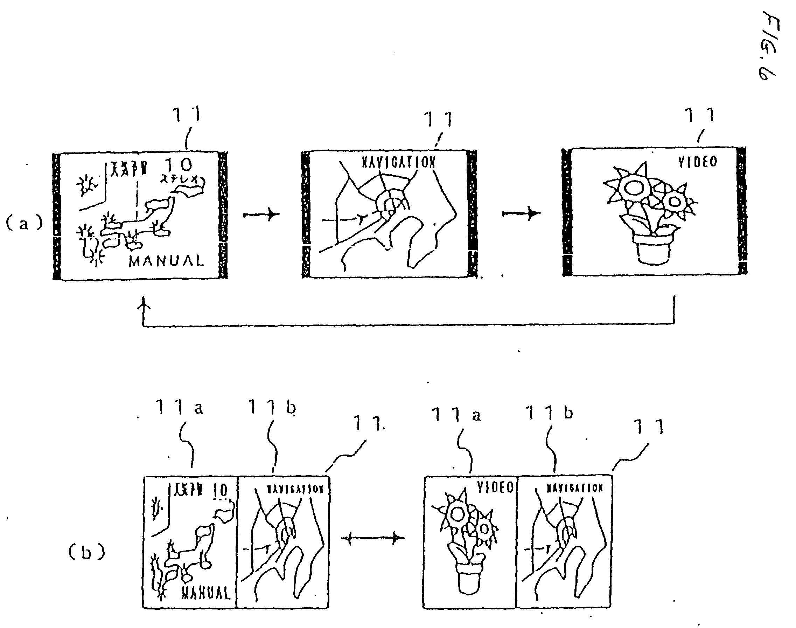

Next, in Step 85, pressing TV/NAV source switching key 22 changes the source to be displayed on the screen in turn. Following Step 85, whether the screen mode is the single-screen display mode or dual-screen display mode is determined in Step 86. If the screen mode is the single-screen display mode, the screen changes in turn from television (TV) 3a, to car navigation unit (NAV) 2a, and to video (AV) 4a, as shown in Fig. 6 (a). The audio information to be supplied from the car audio system is also switched according to the source displayed on the screen. Note however that the audio information to be output from speaker 19 of monitor 10 can be selected using selection switch 6 as explained above. Therefore, if NAV has been selected, audio information 2b from NAV can be constantly supplied from speaker 19 of monitor 10 even when source switching switch 22 is pressed to switch the display source, so that the announcements from the car navigation system can be constantly monitored. The initial value for AV monitor 39 of this embodiment selects NAV in the single-screen display mode, so that information from NAV 32 is displayed when AV monitor 39 is turned on.

If the screen mode is determined to be the dual-screen display mode in Step 86, pressing source switching switch 22 toggles one of the screens between TV 3a and AV 4a in Step 88 as shown in Fig. 6 (b). Meanwhile, information from NAV is displayed on the other screen. In the dual-screen display mode, the audio information from the source of the video information being displayed on the left-side screen is supplied via the car audio system. However, even in this state, AV monitor 39 in this embodiment allows audio information 2b from NAV to be constantly monitored using selection switch 6 as explained above.

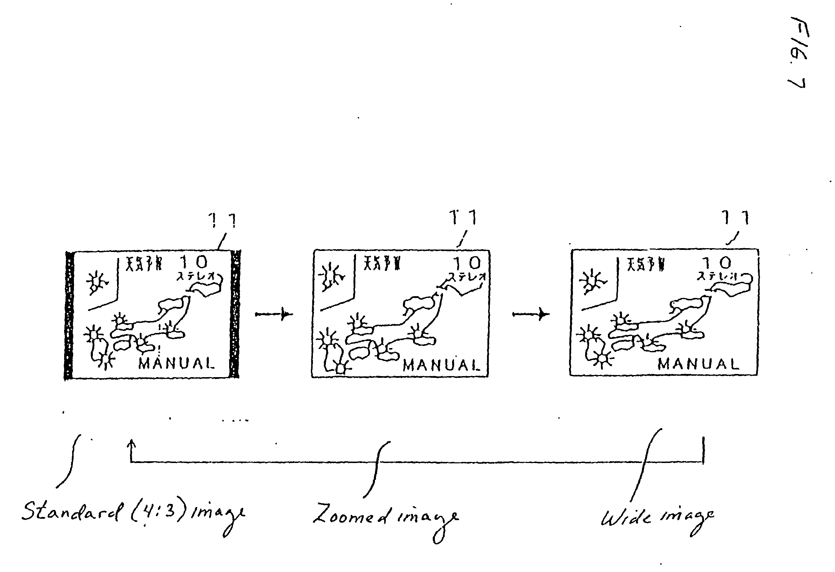

With AV monitor 39 in this embodiment, more varied display switching can be performed by operating mode switch 26 of the remote controller. First, when pressing of mode switch 26 is detected in Step 89, screen mode is checked in Step 90. If the screen mode is determined to be the single-screen display mode, the display mode for the screen is switched to Normal, Zoom, or Wide in Step 91. This kind of display mode switching is possible since AV monitor 39 in this embodiment uses wide liquid crystal display panel 11. In the Normal mode, a conventional screen with a 3 : 4 vertical-to-horizontal ratio is used for display as shown in Fig. 7. In the Zoom mode, the horizontal dimension is expanded to equal the size of display panel 11 while maintaining the 3 : 4 vertical-to-horizontal ratio. Consequently, the top and bottom of the display is cut off. In the Wide mode, an image that is expanded in the horizontal direction to match the 9 : 16 vertical-to-horizontal ratio of wide display panel 11 is displayed. Of course, these display modes are available when TV 3a is selected as well as when NAV 2a or video 4a is selected.

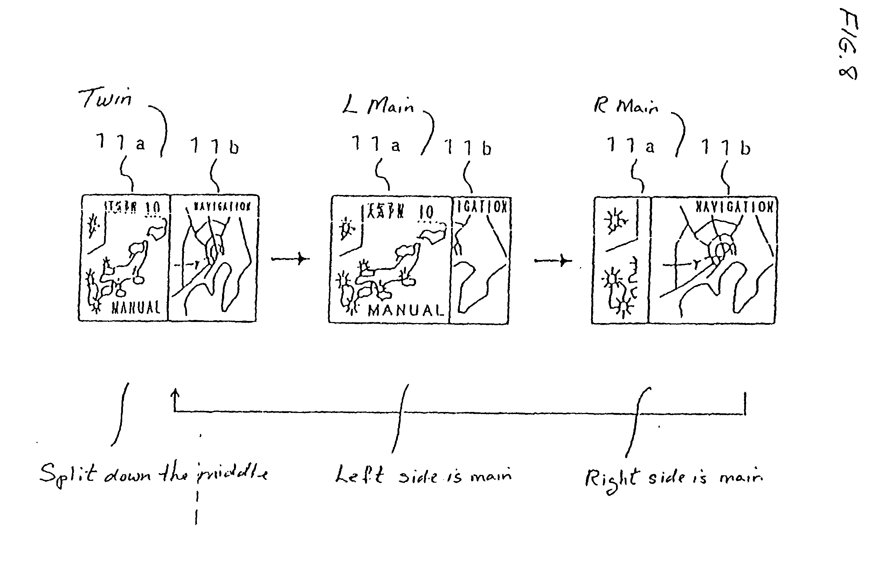

On the other hand, if the screen mode is determined to be the dual-screen display mode in Step 90, the display mode for the screen is switched to Twin, L Main, and R Main in Step 92 every time mode switch 6 is pressed, as shown in Fig. 8. The initial value of the AV monitor 39 in this embodiment is set to the Twin mode. In this mode, screen 11 is split in the middle and video information from two sources is displayed in equal sizes, i.e., with a 9 : 8 vertical-to-horizontal ratio with slight horizontally compression. In the L Main mode, left side 11a of screen 11 becomes the main screen. In this mode, a conventional image with a 3 : 4 vertical-to-horizontal ratio is displayed on left-side screen 11a, and right-side screen 11b is displayed in the remaining area. On the other hand, in the R Main mode, right side 11b of screen 11 becomes the main screen. In this mode, a conventional image with a 3 : 4 vertical-to-horizontal ratio is displayed on right-side screen 11b, and left-side screen 11a is displayed in the remaining area. Since the dual-screen display mode always displays image 2a from NAV in one of the screens as explained above, such a mode setting allows the user to choose to view video information 2a from NAV as the main information or to view the information from TV or other video information as the main information. The user can also freely set the position in which to display such information.

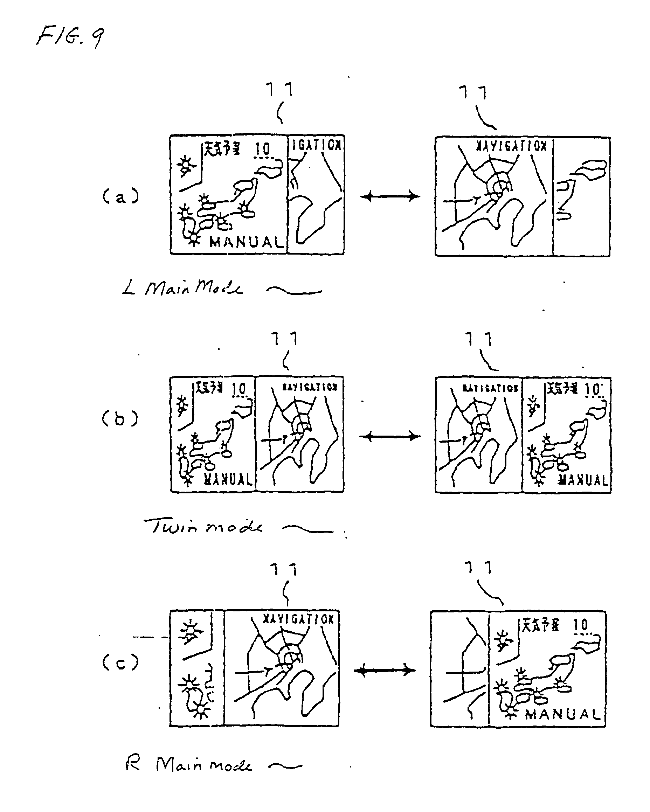

Furthermore, in the dual-screen display mode, AV monitor 39 in this embodiment allows the user to freely swap the images being displayed on the left and right sides. All that is needed is to press left-right swapping key 27 of remote controller 20. When pressing of swapping key 27 is confirmed in Step 93, screen mode is checked in Step 94; and if the screen mode is the dual-screen display mode, the two screens are swapped in Step 95. On the other hand, if the screen mode is determined to be the single-screen display mode, no screen operation takes place and the process moves onto checking the next switch operation. The screens can be swapped from any state as long as the screen is in the dual-screen display mode. For example, if the L Main mode is in effect as shown in Fig. 9 (a), the main video information on the left side and the sub video information on the right side are immediately swapped. If the Twin mode is in effect as shown in Fig. 9 (b), the video information on the left side and the right side are swapped. If the R Main mode is in effect as shown in Fig. 9 (c), the main video information on the right side and the sub video information on the left side are swapped. When AV monitor 39 in this embodiment is in the dual-screen display mode, the audio information for the image being displayed on left side 11a of display panel 11 is supplied from the car audio system. Therefore, when the left and right video information is swapped by screen swapping switch 27, audio information is also automatically swapped. In other words, the audio information can be swapped by manipulating the video information. Since the user can automatically manipulate the audio information by manipulating the images, the desired audio information can be quickly obtained using a simple operation. Even when screens are swapped in this way, audio information 2a from NAV can be continuously monitored through speaker 19 of monitor 10 as described above, and thus the user will not miss any of audio information 2b from the car navigation system.

Since AV monitor 39 in this embodiment is also equipped with mode adjustment switch 28, its operation is checked in Step 96; and if the screen mode is determined to be the single-screen display mode in Step 97, a series of adjustments are made in Step 98. On the other hand, no adjustments are made in the dual-screen display mode and the process moves onto checking another switch. AV monitor 39 in this embodiment can also determine whether or not the car is being driven based on the hand brake (parking brake) position, etc. in Step 99; and shifts to the NAV priority mode in Step 100 if it is determined that the car is being driven; and video information 2a and audio information 2b from NAV are automatically selected as the input sources in the single-screen display mode. This selection can be made by output-side selectors 56 and 52 of AV selection area 50 into which video information 2a and audio information 2b from NAV are being directly input. Therefore, even while the car is being driven, input-side selectors 55 and 51 can select information from various sources (i.e., NAV, TV, or AV), and this information can be output from video output terminal 5 to a monitor in the rear passenger compartment so that the passengers there can enjoy TV and video programs.

In AV monitor 39 of this embodiment, mode selection and other processing can be performed by repeatedly sampling the operation states of the aforementioned various operation switches. The video display mode and the audio output mode that have been set are stored without any modifications, so that the system can be set to these stored modes when power is turned on subsequently, unless it is returned to the initial setting mode.

As explained above, AV monitor (audio-video output device) 39 in this embodiment allows the user to enjoy video information from a TV or video player while constantly monitoring the video and audio information from the car navigation system which supplies information necessary for driving. Therefore, AV monitor 39 in this embodiment allows the user to perform operations, such as setting the car navigation system and monitoring the distance and time driven, while watching TV or video, all on a single display. AV monitor 39 in this embodiment is equipped with the function of an inexpensive and easy-to-install terminal that can simultaneously output video and audio information from multiple sources; and is also equipped with the function of constantly monitoring the video or audio information by treating one of these sources as the main source. Therefore, the AV monitor in this embodiment can be used in a wide variety of applications, such as terminals for car navigation systems that must be constantly monitored, positional display monitors in ships, and disaster information monitors. Furthermore, since the AV system in this embodiment allows the user to constantly monitor information from a single source while enjoying information from multiple sources on a single display, a system that reliably supplies a particular type of information to the user while supplying many types of information can be inexpensively constructed.

Although a monitor equipped with three types of input sources (TV, NAV, and video player) is used for the explanation above, a monitor equipped with four or more input sources can of course be used; and the screen can also be split into any number in addition to two. Although an embodiment equipped with hardware that can constantly display the images and information from NAV is explained in the AV monitor of this embodiment, a system that allows the user to select the main source to be constantly displayed is also possible. Furthermore, in this embodiment, everything except audio information output setting in the monitor area can be controlled by the microcomputer. However, it is also possible to use the microcomputer to select audio information in the monitor area, and conversely it is also possible to use selection switches for all settings. While the device in this embodiment uses a liquid crystal display panel, other thin display panels, such as a plasma display, can also be used. VICS™(Vehicle Information and Communication System) information, though not containing any audio information, can also be displayed as car navigation information. However, since no audio information is available in this case, no sound is output from the speaker of the AV monitor in some cases.

As explained above, by installing multiple audio output means or a video output means that can split the screen for display, the invention can provide an audio-video output device that can provide the user-with-information from multiple input sources using a single display. Furthermore, by allocating one of the multiple audio output means to a specific input source, the audio information from that particular source can be provided to the user on a real-time basis regardless of the mode to which the audio-video output device is set. Moreover, by allocating one of the multiple sources that can be displayed to a specific input source, the video information from that particular source can be constantly displayed. Therefore, the audio-video output device according to the invention can be used to inexpensively construct a system that can simultaneously output video and audio information from multiple sources, and which can reliably obtain particular information without fail.

Furthermore, the use of the audio-video output device according to the invention in a car navigation system can provide a car navigation system that can respond to the user's various needs as explained above.

## Claims

1. An audio-video output device having
a first input means (2) into which the video information and audio information from a first source (32) can be input;
a second input means (3) into which the video information and audio information from a second source (33) can be input;
a third input means (4) into which the video information and audio information from a third source (34) can be input;
a video output means (10) that can output the video information from said first, second, or third source;
a first audio output means (19) that outputs the audio information from said first, second, or third source, whichever is being output to said video output means;
wherein said video output means (10) is provided with a single-screen display mode that displays said first, second, or third source on a display screen (11) and with a multi-screen display mode that splits said display screen (11), displays the video information from said first source on one of the screens (11a, 11b), and displays the video information from either said second or third source on the other screen (11a, 11b); and
**characterised by**
a second audio output means that can output the audio information from said first source only.

2. The audio-video output device according to Claim 1, **characterised by** a first audio selection means that selects the audio information from said first, second, or third source, whichever is being output to said video output means (10), and with
a second audio selection means that selects either the audio information selected by said first audio selection means or the audio information from said first source (32) and supplies it to said second audio output means.

3. The audio-video output device according to Claim 1, **characterised by** a third audio selection means that selects the audio information from the source being displayed in the predetermined area of said display screen, and supplies it to said first audio output means and said second audio selection means, in said multi-screen display mode.

4. The audio-video output device according to Claim 3, **characterised in that** said second audio output means is a monitor output device provided along with said video output means.

5. The audio-video output device according to Claim 2, **characterised in that** in said multi-screen display mode, said display screen (11) can be vertically split into at least two screens (11a, 11b) for display comprising a left area and a right area, and the video information from the sources to be displayed on the left and right areas can be swapped; and
said third audio selection means selects the audio information from the source being displayed in either the left or right area.

6. An audio-video output device comprising:
a video connection terminal;
an audio connection terminal;
a first input terminal (2) for receiving a first video signal (2a) and a first audio signal (2b) from a first source (32), said first input terminal (2) having a first video line for carrying said first video signal and having a first audio line for carrying said first audio signal;
a second input terminal (3) for receiving a second video signal (3a) and a second audio signal (3b) from a second source (33), said second input terminal (3) having a second video line for carrying said second video signal (3a) and having a second audio line for carrying said second audio signal (3b);
a third input terminal (4) for receiving a third video signal (4a) and a third audio signal (4b) from a third source (34), said third input terminal (4) having a third video line for carrying said third video signal (4a) and having a third audio line for carrying said third audio signal (4b);
a first video selector (55) having a first input node electrically coupled to said first video line and having a second input node electrically coupled to said second video line and having a third input node electrically coupled to said third video line, said first video selector (55) having an intermediate video output node and being effective for selectively coupling one of its first, second and third input nodes to its intermediate video output node;
a second video selector (56) having a first input node electrically coupled to said first video line via a fourth line bypassing said first video selector (55) and having a second input node electrically coupled to said intermediate video output node of said first video selector (55), said second video selector (55) selectively coupling at least one of its first and second input nodes to the video connection terminal;
a first audio selector (51) having a first input node electrically coupled to said first audio line and having a second input node electrically coupled to said second audio line and having a third input node electrically coupled to said third audio line, said first audio selector (51) having an intermediate audio output node and selectively coupling one of its first, second and third input nodes to its intermediate audio output node; and
a second audio selector (53) having a first input node electrically coupled to said first audio line via a fourth line bypassing the first audio selector and having a second input node electrically coupled to said intermediate audio output node of said first audio selector, said second audio selector selectively coupling one of its first and second input nodes to the audio connection terminal.

7. The audio-video output device according to Claim 6, wherein said second video selector is further effective for establishing a dual-screen mode in which said second video selector applies a split screen image to the video connection terminal, said split screen image including the image of said first video line in one screen and the image of said intermediate video output node in a second screen.

8. The audio-video output device according to Claim 6, wherein said second video selector includes a first image output node coupled to the video connection terminal and a second image output node coupled to the video connection terminal, said second video selector being effective for selectively coupling its second input node to either of said first and second image output nodes, and effective for selectively coupling its first input node to only said second image output node;
said second video selector establishing a dual-screen mode by coupling its first input node to its second image output node and coupling its second input node to its first image output node.

9. The audio-video output device according to Claim 6, wherein said first source comprises a car navigation system (32) for use in a car having at least a park operation mode and a drive operation mode, said second video selector being effective for applying its first input node to the video connection terminal in response to said car being in said drive operation mode.

10. The audio-video output device of Claim 6 further having a third audio selector (52) having a first input node electrically coupled to said first audio line via a fifth audio line bypassing said first and second audio selector (51, 53), said third audio selector (52) selectively coupling said first audio line to the audio connection terminal in response to a manual override switch (6).

11. The audio-video output device of Claim 6, further comprising:
a video display (11) electrically coupled to the video connection terminal; and
a speaker (19) electrically coupled to the audio connection terminal.

12. The audio-video output device of Claim 6, further comprising:
a video terminal electrically coupled to the intermediate video output of the first video selector; and
an audio output terminal electrically coupled to the intermediate audio output node of the first audio selector.

## Patentansprüche

1. Audio-Video-Ausgabevorrichtung, umfassend:
ein erstes Eingabemittel (2), in das die Videoinformationen und Audioinformationen von einer ersten Quelle (32) eingegeben werden können;
ein zweites Eingabemittel (3), in das die Videoinformationen und Audioinformationen von einer zweiten Quelle (33) eingegeben werden können;
ein drittes Eingabemittel (4), in das die Videoinformationen und Audioinformationen von einer dritten Quelle (34) eingegeben werden können;
ein Videoausgabemittel (10), das die Videoinformationen von der ersten, der zweiten oder der dritten Quelle ausgeben kann;
ein erstes Audioausgabemittel (19), das die Audioinformationen von der ersten, der zweiten oder der dritten Quelle ausgibt, welche von diesen auch immer an das Videoausgabemittel ausgegeben wird;
wobei das Videoausgabemittel (10) versehen ist mit einem Einzelbildschirm-Anzeigemodus, der die erste, die zweite oder die dritte Quelle auf einem Anzeigebildschirm (11) anzeigt, sowie mit einem Mehrfachbildschirm-Anzeigemodus, der den Anzeigebildschirm (11) unterteilt, die Videoinformationen von der ersten Quelle auf einem der Bildschirme (11a, 11 b) anzeigt, und die Videoinformationen entweder von der zweiten oder der dritten Quelle auf dem anderen Bildschirm (11a, 11b) anzeigt;
**gekennzeichnet durch**
ein zweites Audioausgabemittel, das die Audioinformationen nur von der ersten Quelle ausgeben kann.

2. Audio-Video-Ausgabevorrichtung nach Anspruch 1, **gekennzeichnet durch** ein erstes Audioauswahlmittel, das die Audioinformationen von der ersten, der zweiten oder der dritten Quelle auswählt, welche auch immer an das Videoausgabemittel (10) ausgegeben wird, sowie
ein zweites Audioauswahlmittel, das entweder die vom ersten Audioauswahlmittel ausgewählten Audioinformationen oder die Audioinformationen von der ersten Quelle (32) auswählt und diese dem zweiten Audioausgabemittel zuführt.

3. Audio-Video-Ausgabevorrichtung nach Anspruch 1, **gekennzeichnet durch** ein drittes Audioauswahlmittel, das im Mehrfachbildschirm-Anzeigemodus die Audioinformationen von derjenigen Quelle auswählt, die auf dem vorbestimmten Bereich des Anzeigebildschirms angezeigt wird, und diese dem ersten Audioausgabemittel und dem zweiten Audioauswahlmittel zuführt.

4. Audio-Video-Ausgabevorrichtung nach Anspruch 3, **dadurch gekennzeichnet, dass** das zweite Audioausgabemittel eine Monitorausgabevorrichtung ist, die zusammen mit dem Videoausgabemittel vorgesehen ist.

5. Audio-Video-Ausgabevorrichtung nach Anspruch 2, **dadurch gekennzeichnet, dass** im Mehrfachbildschirm-Anzeigemodus der Anzeigebildschirm (11) vertikal in wenigstens zwei Bildschirme (11a, 11b) unterteilt werden kann für eine Anzeige, die einen linken Bereich und einen rechten Bereich umfasst, wobei die Videoinformationen von den auf den linken und rechten Bereichen anzuzeigenden Quellen vertauscht werden können; und
das dritte Audioauswahlmittel die Audioinformationen von der Quelle auswählt, die entweder im linken oder im rechten Bereich angezeigt wird.

6. Audio-Video-Ausgabevorrichtung, umfassend:
einen Videoverbindungsanschluss;
einen Audioverbindungsanschluss;
einen ersten Eingabeanschluss (2) zum Empfangen eines ersten Videosignals (2a) und eines ersten Audiosignals (2b) von einer ersten Quelle (32), wobei der erste Eingabeanschluss (2) eine erste Videoleitung zum Führen des ersten Videosignals und eine erste Audioleitung zum Führen des ersten Audiosignals aufweist;
einen zweiten Eingabeanschluss (3) zum Empfangen eines zweiten Videosignals (3a) und eines zweiten Audiosignals (3b) von einer zweiten Quelle (33), wobei der zweite Eingabeanschluss (3) eine zweite Videoleitung zum Führen des zweiten Videosignals (3a) und eine zweite Audioleitung zum Führen des zweiten Audiosignals (3b) aufweist;
einen dritten Eingabeanschluss (4) zum Empfangen eines dritten Videosignals (4a) und eines dritten Audiosignals (4b) von einer dritten Quelle (34), wobei der dritte Eingabeanschluss (4) eine dritte Videoleitung zum Führen des dritten Videosignals (4a) und eine dritte Audioleitung zum Führen des dritten Audiosignals (4b) aufweist;
eine erste Videoauswahlvorrichtung (55), die einen ersten Eingabeknoten, der mit der ersten Videoleitung elektrisch gekoppelt ist, sowie einen zweiten Eingabeknoten, der mit der zweiten Videoleitung gekoppelt ist, und einen dritten Eingabeknoten, der mit der dritten Videoleitung elektrisch gekoppelt ist, aufweist, wobei die erste Videoauswahlvorrichtung (55) einen Zwischen-Videoausgabeknoten aufweist und bewirkt, dass einer ihrer ersten, zweiten und dritten Eingabeknoten mit ihrem Zwischen-Videoausgabeknoten selektiv gekoppelt wird;
eine zweite Videoauswahlvorrichtung (56), die einen ersten Eingabeknoten, der mit der ersten Videoleitung über eine vierte Leitung elektrisch gekoppelt ist, die die erste Videoauswahlvorrichtung (55) umgeht, und einen zweiten Eingabeknoten, der mit dem Zwischen-Videoausgabeknoten der ersten Videoauswahlvorrichtung (55) elektrisch gekoppelt ist, aufweist, wobei die zweite Videoauswahlvorrichtung (56) selektiv wenigstens einen ihrer ersten und zweiten Eingabeknoten mit dem Videoverbindungsanschluss koppelt;
eine erste Audioauswahlvorrichtung (51), die einen ersten Eingabeknoten, der mit der ersten Audioleitung elektrisch gekoppelt ist, einen zweiten Eingabeknoten, der mit der zweiten Audioleitung gekoppelt ist, und einen dritten Eingabeknoten, der mit der dritten Audioleitung elektrisch gekoppelt ist, aufweist, wobei die erste Audioauswahlvorrichtung (51) einen Zwischen-Audioausgabeknoten aufweist und einen ihrer ersten, zweiten und dritten Eingabeknoten mit ihrem Zwischen-Audioausgabeknoten selektiv koppelt; und
eine zweite Audioauswahlvorrichtung (53), die einen ersten Eingabeknoten, der mit der ersten Audioleitung über eine vierte Leitung verbunden ist, die die erste Audioauswahlvorrichtung umgeht, und einen zweiten Eingabeknoten, der mit dem Zwischen-Audioausgabeknoten der ersten Audioauswahlvorrichtung elektrisch gekoppelt ist, aufweist, wobei die zweite Audioauswahlvorrichtung einen ihrer ersten und zweiten Eingabeknoten mit dem Audioverbindungsanschluss selektiv koppelt.

7. Audio-Video-Ausgabevorrichtung nach Anspruch 6, bei der die zweite Videoauswahlvorrichtung ferner bewirkt, dass ein Doppelbildschirmmodus eingerichtet wird, bei dem die zweite Videoauswahlvorrichtung ein Bildschirmaufteilungsbild an den Videoverbindungsanschluss anlegt, wobei das Bildschirmaufteilungsbild das Bild der ersten Videoleitung in einem Bildschirm und das Bild des Zwischen-Videoausgabeknotens in einem zweiten Bildschirm enthält.

8. Audio-Video-Ausgabevorrichtung nach Anspruch 6, bei der die zweite Videoauswahlvorrichtung einen ersten Bildausgabeknoten enthält, der mit dem Videoverbindungsanschluss gekoppelt ist, sowie einen zweiten Bildausgabeknoten, der mit dem Videoverbindungsanschluss gekoppelt ist, wobei die zweite Videoauswahlvorrichtung bewirkt, dass ihr zweiter Eingabeknoten entweder mit dem ersten oder dem zweiten Bildausgabeknoten selektiv gekoppelt wird, und bewirkt, dass ihr erster Eingabeknoten nur mit dem zweiten Bildausgabeknoten selektiv gekoppelt wird; und
die zweite Videoauswahlvorrichtung einen Doppelbildschirmmodus einrichtet durch Koppeln ihres ersten Eingabeknotens mit ihrem zweiten Bildausgabeknoten und Koppeln ihres zweiten Eingabeknotens mit ihrem ersten Bildausgabeknoten.

9. Audio-Video-Ausgabevorrichtung nach Anspruch 6, bei der die erste Quelle ein Kraftfahrzeug-Navigationssystem (32) für die Verwendung in einem Kraftfahrzeug umfasst, das wenigstens einen Parkbetriebsmodus und einen Fahrbetriebsmodus aufweist, wobei die zweite Videoauswahlvorrichtung bewirkt, dass in Reaktion darauf, dass sich das Kraftfahrzeug im Fahroperationsmodus befindet, ihr erster Eingabeknoten an den Videoverbindungsanschluss angelegt wird.

10. Audio-Video-Ausgabevorrichtung nach Anspruch 6, die ferner eine dritte Audioauswahlvorrichtung (52) aufweist, die einen ersten Eingabeknoten aufweist, der mit der ersten Audioleitung über eine fünfte Audioleitung, die die erste und die zweite Audioauswahlvorrichtung (51, 53) umgeht, elektrisch gekoppelt ist, wobei die dritte Audioauswahlvorrichtung (52) in Reaktion auf einen manuellen Übersteuerungsschalter (6) die erste Audioleitung selektiv mit dem Audioverbindungsanschluss koppelt.

11. Audio-Video-Ausgabevorrichtung nach Anspruch 6, femer umfassend:
eine Videoanzeigevorrichtung (11), die mit dem Videoverbindungsanschluss elektrisch gekoppelt ist; und
einen Lautsprecher (19), der mit dem Audioverbindungsanschluss elektrisch gekoppelt ist.

12. Audio-Video-Ausgabevorrichtung nach Anspruch 6, ferner umfassend:
einen Videoanschluss, der mit dem Zwischen-Videoausgang der Videoauswahlvorrichtung elektrisch gekoppelt ist; und
einen Audioausgabeanschluss, der mit dem Zwischen-Audioausgabeknoten der ersten Audioauswahlvorrichtung elektrisch gekoppelt ist.

## Revendications

1. Dispositif de sortie audio-vidéo comportant
un premier moyen d'entrée (2) dans lequel les informations vidéo et les informations audio d'une première source (32) peuvent être entrées ;
un deuxième moyen d'entrée (3) dans lequel les informations vidéo et les informations audio d'une deuxième source (33) peuvent être entrées ;
un troisième moyen d'entrée (4) dans lequel les informations vidéo et les informations audio d'une troisième source (34) peuvent être entrées ;
un moyen de sortie vidéo (10) qui peut sortir les informations vidéo de ladite première, deuxième ou troisième source ;
un premier moyen de sortie audio (19) qui sort les informations audio de ladite première, deuxième ou troisième source, quelle que soit celle qui est sortie vers ledit moyen de sortie vidéo ;
dans lequel ledit moyen de sortie vidéo (10) est équipé d'un mode affichage à écran unique qui affiche ladite première, deuxième ou troisième source sur un écran d'affichage (11) et d'un mode affichage multi-écrans qui divise ledit écran d'affichage (11), affiche les informations vidéo de ladite première source sur un des écrans (11a, 11b) et affiche les informations vidéo de soit ladite deuxième soit ladite troisième source sur l'autre écran (11a, 11b) ; et **caractérisé par**
un deuxième moyen de sortie audio qui peut sortir les informations audio de ladite première source seulement.

2. Dispositif de sortie audio-vidéo selon la revendication 1, **caractérisé par** un premier moyen de sélection audio qui sélectionne les informations audio de ladite première, deuxième ou troisième source, quelle que soit celle qui est sortie vers ledit moyen de sortie vidéo (10), et avec
un deuxième moyen de sélection audio qui sélectionne soit les informations audio sélectionnées par ledit premier moyen de sélection audio soit les informations audio de ladite première source (32) et les fournit audit deuxième moyen de sortie audio.

3. Dispositif de sortie audio-vidéo selon la revendication 1, **caractérisé par** un troisième moyen de sélection audio qui sélectionne les informations audio de la source étant affichée dans la zone prédéterminée dudit écran d'affichage, et les fournit audit premier moyen de sortie audio et audit deuxième moyen de sélection audio, dans ledit mode affichage multi-écrans.

4. Dispositif de sortie audio-vidéo selon la revendication 3, **caractérisé en ce que** ledit deuxième moyen de sortie audio est un dispositif de sortie de contrôle fourni conjointement avec ledit moyen de sortie vidéo.

5. Dispositif de sortie audio-vidéo selon la revendication 2, **caractérisé en ce que** dans ledit mode affichage multi-écrans, ledit écran d'affichage (11) peut être divisé verticalement en au moins deux écrans (11a, 11b) pour un affichage comprenant une partie gauche et une partie droite, et les informations vidéo en provenance des sources à afficher sur les parties gauche et droite peuvent être permutées ; et
ledit troisième moyen de sélection audio sélectionne les informations audio en provenance de la source affichée dans soit la zone gauche soit la zone droite.

6. Dispositif de sortie audio-vidéo comprenant :
un terminal de connexion vidéo ;
un terminal de connexion audio ;
un premier terminal d'entrée (2) pour recevoir un premier signal vidéo (2a) et un premier signal audio (2b) d'une première source (32), ledit premier terminal d'entrée (2) comportant une première ligne vidéo pour transporter ledit premier signal vidéo et comportant une première ligne audio pour transporter ledit premier signal audio ;
un deuxième terminal d'entrée (3) pour recevoir un deuxième signal vidéo (3a) et un deuxième signal audio (3b) d'une deuxième source (33), ledit deuxième terminal d'entrée (3) comportant une deuxième ligne vidéo pour transporter ledit deuxième signal vidéo (3a) et comportant une deuxième ligne audio pour transporter ledit deuxième signal audio (3b);
un troisième terminal d'entrée (4) pour recevoir un troisième signal vidéo (4a) et un troisième signal audio (4b) d'une troisième source (34), ledit troisième terminal d'entrée (4) comportant une troisième ligne vidéo pour transporter ledit troisième signal vidéo (4a) et comportant une troisième ligne audio pour transporter ledit troisième signal audio (4b);
un premier sélecteur vidéo (55) comportant un premier noeud d'entrée couplé électriquement à ladite première ligne vidéo et comportant un deuxième noeud d'entrée couplé électriquement à ladite deuxième ligne vidéo et comportant un troisième noeud d'entrée couplé électriquement à ladite troisième ligne vidéo, ledit premier sélecteur vidéo (55) comportant un noeud de sortie vidéo intermédiaire et étant efficace pour coupler sélectivement un de ses premier, deuxième et troisième noeuds d'entrée à son noeud de sortie vidéo intermédiaire ;
un deuxième sélecteur vidéo (56) comportant un premier noeud d'entrée couplé électriquement à ladite première ligne vidéo au moyen d'une quatrième ligne contournant ledit premier sélecteur vidéo (55) et comportant un deuxième noeud d'entrée couplé électriquement audit noeud de sortie vidéo intermédiaire dudit premier sélecteur image (55), ledit deuxième sélecteur vidéo (56) couplant sélectivement au moins un de ses premier et deuxième noeuds d'entrée au terminal de connexion vidéo ;
un premier sélecteur audio (51) comportant un premier noeud d'entrée couplé électriquement à ladite première ligne audio et comportant un deuxième noeud d'entrée couplé électriquement à ladite deuxième ligne audio et comportant un troisième noeud d'entrée couplé électriquement à ladite troisième ligne audio, ledit premier sélecteur audio (51) comportant un noeud de sortie audio intermédiaire et couplant sélectivement un de ses premier, deuxième et troisième noeuds d'entrée à son noeud de sortie audio intermédiaire ; et
un deuxième sélecteur audio (53) comportant un premier noeud d'entrée couplé électriquement à ladite première ligne audio au moyen d'une quatrième ligne contournant ledit premier sélecteur audio et comportant un deuxième noeud d'entrée couplé électriquement audit noeud de sortie audio intermédiaire dudit premier sélecteur audio, ledit deuxième sélecteur audio couplant sélectivement un de ses premier et deuxième noeuds d'entrée au terminal de connexion audio.

7. Dispositif de sortie audio-vidéo selon la revendication 6, dans lequel ledit deuxième sélecteur vidéo est en outre efficace pour établir un mode double écran dans lequel ledit deuxième sélecteur vidéo applique une image d'écran divisée au terminal de connexion vidéo, ladite image d'écran divisée comprenant l'image de ladite première ligne image sur un écran et l'image dudit noeud de sortie vidéo intermédiaire sur un second écran.

8. Dispositif de sortie audio-vidéo selon la revendication 6, dans lequel ledit deuxième sélecteur vidéo comprend un premier noeud de sortie image couplé au terminal de connexion vidéo et un deuxième noeud de sortie image couplé au terminal de connexion vidéo, ledit deuxième sélecteur vidéo étant efficace pour coupler sélectivement son deuxième noeud d'entrée à l'un ou l'autre desdits premier et deuxième noeuds de sortie image, et efficace pour coupler sélectivement son premier noeud d'entrée seulement audit deuxième noeud de sortie image ;
ledit deuxième sélecteur vidéo établissant un mode double écran en couplant son premier noeud d'entrée à son deuxième noeud de sortie image et en couplant son deuxième noeud d'entrée à son premier noeud de sortie image.

9. Dispositif de sortie audio-vidéo selon la revendication 6, dans lequel ladite première source comprend un système de navigation automobile (32) à utiliser dans une voiture comportant au moins un mode de gestion de stationnement et un mode de gestion de conduite, ledit deuxième sélecteur vidéo étant efficace pour appliquer son premier noeud d'entrée au terminal de connexion vidéo en réponse à ladite voiture étant dans ledit mode de gestion de conduite.

10. Dispositif de sortie audio-vidéo selon la revendication 6, comportant en outre un troisième sélecteur audio (52) comportant un premier noeud d'entrée couplé électriquement à ladite première ligne audio au moyen d'une cinquième ligne audio contournant lesdits premier et deuxième sélecteurs audio (51, 53), ledit troisième sélecteur audio (52) couplant sélectivement ladite première ligne audio au terminal de connexion audio en réponse à un interrupteur prioritaire manuel (6).

11. Dispositif de sortie audio-vidéo selon la revendication 6, comprenant en outre :
un affichage vidéo (11) couplé électriquement à un terminal de connexion vidéo ; et
un haut-parleur (19) couplé électriquement au terminal de connexion audio.

12. Dispositif de sortie audio-vidéo selon la revendication 6, comprenant en outre :
un terminal vidéo couplé électriquement à la sortie vidéo intermédiaire du premier sélecteur vidéo ; et
un terminal de sortie audio couplé électriquement au noeud de sortie audio intermédiaire du premier sélecteur audio.
